# EUROPEAN PATENT APPLICATION

(11) **EP 2 508 070 A1**
(43) Date of publication of application: **10.10.2012**
(21) Application number: 11158058.5
(22) Date of filing: 14.03.2011
(51) Int. Cl.: A01N 3/00, A01N 3/02, A01P 3/00

(54) **Coating for flower heads**

(71) Applicant: Patent 06-001 B.V., 2342 LB Oegstgeest (NL)
(72) Inventor: van Velzen, Dick, 2343 BR, OEGSTGEEST (NL); van der Luit, Johan Louis, 2341 PD, OEGSTGEEST (NL); Monster, Victor Steven, 2343 BR, OEGSTGEEST (NL); van der Berg, Eugene Robert, 2341 KD, OEGSTGEEST (NL)
(74) Representative: De Hoop, Eric

(57) **Abstract**

The invention relates to a composition for coating flower heads, especially roses, post-harvest to inhibit or prevent infection of the flowers during transport and storage. The invention further relates to a method of inhibiting or preventing infection of cut flowers by applying the composition to the flower heads. The composition comprises a polymer produced from the monomers vinyl acetate and ethylene, and optionally a vinyl ester of a highly branched carboxylic acid, glycerol and water, the composition being in the form of a dispersion. The composition may act as a carrier for slow release of bioactive agents, such as crop protection agents, in particular fungicides.

## Description

### BACKGROUND OF THE INVENTION

The invention relates to a composition for coating flower heads to prevent or slow down, infection of flower heads during post-harvest storage and transport to final retail, and a use of the coating composition. The invention is especially suitable for flower heads of roses and rose buds.

Roses are harvested in an early to late pre-opening stage, and subsequently cooled for transport by various means such as air transport but also by ship / container to countries and markets of end use. At arrival, roses are then transported to cooled storage facilities, but may be moved between cooled storage facilities a number of times during which condensation of ambient water vapor on the flowers will occur. Here they remain until marketing and retail shipping.

Facilitated by the wet surface of buds, a number of infections may occur or become manifest during and after storage, especially with molds and in particular botrytis species. These organisms and their spores presumably are present in low density or frequency in all roses already at harvest, but may and will spread through the stored plants. This again will seriously affect retail prices of such roses if not lead to outright losses. More importantly, such spores are present at relevant quantities in all circulating air and especially so in processing facilities where dust of dead flower and plant material is present at high concentrations.

The only present commercially applied strategies to counter this issue consist firstly of cooling to temperatures to (just) above 0°C which slows down metabolism of any developing and activated spores. Secondly, some degree of protection is supposedly provided by the regular spraying in greenhouses or open air facilities of Crop Protection Agents (CPAs) to which Botrytis has demonstrated suitable sensitivity. Such continued protection depends primarily on reducing spore load of cut flowers as they enter the post-harvest stage with the associated handling and condensation risks associated with regular changes between colder and warmer facilities. As a result one may assume the CPA use in the greenhouse to provide only partial protection and this may well explain why most growers, even in the presence of a well recognized infection problem have to date not commenced systematic spraying even during the season of highest infection risks. During the post-harvest stage some attempts have been made to use CPAs by spraying onto the top surfaces of bunched and wrapped flowers. The results of this approach have not been sufficiently consistent and beneficial to have been introduced throughout the trade.

Finally the presence of a seasonal pattern of infection rates would suggest that climate control, with special reference to humidity levels in the greenhouses, may have an as yet unresolved role to play. Perhaps more important, but much underappreciated in the field, is the effect of deteriorating growth conditions in autumn and winter where plant production of natural resistance factors, such as tannins and plant oils, inclusive of terpenes, is much reduced. To date no breeding program for more resistant roses has successfully developed strains which do not suffer from this problem.

Thus as to date, no single effective strategy has been developed for even materially reducing the risk of Botrytis infections in cut roses, with severe effects on the sales potential of roses grown in endangered areas.

A separate and additional complication exists in roses grown and harvested at great distances from the final user markets. These have to be transported often over days with a number of temperature changes. For the purpose of acceleration towards retail and to reduce the number of episodes of flower handling, the use of wrappings with variable degrees of permeability and/or perforation has been advocated and become common practice. In part the function of these is the prevention of thorns from one plant damaging the others, the puncture wounds providing ports of entry for especially bacterial but also fungal infections. As the films in use consist of PE and other types of material, which for all purposes are to be considered virtually impermeable to oxygen, perforations are the only option for control. Even so, this may well increase the available oxygen, but will still result in accumulation of water vapor resulting from metabolic burning of starch and the likes, behind the film creating high degrees of relative humidity (RH) often enhancing the spread of parasitic fungal infections but especially infections with botrytis.

This vulnerability to infection is increased by the selective metabolic oxidation during transport in the dark, of large molecular structures which include a number of self-produced natural agents that provide resistance to infections such as tannins and terpenes. Provision of nutrients to cut flowers to prevent this happening is virtually impossible. In some parts of the season, such as late autumn where light is reduced and the plant may not have sufficient time or opportunity before harvest to produce and lay down in its tissues these self-produced protective agents, vulnerability increases to levels where economic production becomes effectively impossible.

Thus the state of the art of pre-harvest and post-harvest protection of cut roses results in significant and unavoidable, but largely unpredictable losses due to combination of metabolic and infectious processes. This problem also applies to any other kinds of flowers.

Therefore there is still a strong need in cut flower industry for a method and material for protection during post-harvest storage and transport of flowers, especially roses, that does not have any of the disadvantages mentioned above or effectively corrects for them.

Objects of the invention are therefore to provide a means for protection of flowers, especially roses, during storage and a storage method, that effectively controls a mini-environment surrounding each individual flower head, wherein these are further protected from harmful influences, in which the storage life of the flower head is extended and whereby the flower, once opened, remains appreciable to clients for a longer period of time (extended vase life). The inventors considered the application of a coating to flower heads, especially roses. The prior art does not disclose any compositions for coating flowers or especially roses, rose buds or rose stems to inhibit degradation or prevent damage, infection and losses of these during storage. Such a coating must allow for the continued, even if only minimal, dimensional and structural growth and maturation of the flower head and the flower petals contained within.

### SUMMARY OF THE INVENTION

The objectives mentioned are achieved by a composition for coating flower heads early in the post-harvest phases comprising a polymer produced from the monomers vinyl acetate and ethylene, and optionally a vinyl ester of a highly branched carboxylic acid, glycerol and water, the composition being in the form of a dispersion. The coating composition is applied to the flower heads of harvested flowers. After drying to the air a protective film is formed around the tissues (top of stem, bud remains and flower head with early opening flower petals). This protective film (coating) has a degree of plasticity that allows for maintained integrity of the coating membrane during the post-coating phase of shape changes of the flower head petals to auction and the period beyond. The coating formed has sufficient water permeability and permeability to oxygen and carbon dioxide. The present coating composition may act as a carrier for slow release of bioactive agents, such as CPAs.

In a further aspect the invention relates to a coating composition which, in addition to the components mentioned above, also comprises at least one bioactive agent, in particular at least one CPA. If one or more CPAs are included in the coating composition, the coating formed from such a coating composition decreases the risk of individual flower heads of being infected, by decreasing the progress of infection by spores that may be present anyhow, due to slow and sustained release of the entrapped CPAs and forms a barrier to newly deposited micro-organisms, such as bacteria and fungi, that would otherwise flourish on the flower heads.

The present coating dispersion (either including any bioactive agents or not including bioactive agents), once applied, has considerable potential for reduction of water vapor loss but, due to its reduced but still sufficient CO₂ and O₂ permeability, will avoid death by metabolic depletion of bud outer leaf and bud petal tissue and subsequent rotting.

Surprisingly, the coating is sufficiently permeable for water to prevent accumulation under the coating of too much metabolic water which would increase the risk of invasive infection, but will effectively reduce infection damage due to for example botrytis species due to its enhanced and effective long-term release of CPAs co-applied in the coating composition and trapped in the coating when formed.

The present coating, having the required controlled levels of permeability to water and gasses, allowing for adaptive plasticity to bud and flower head dimensional increase and effectively restricting metabolic breakdown of stored starch, fulfils the existing needs.

The dried solid film (coating) obtained after applying the coating composition to flower heads and drying it, shows an unexpected plasticity, probably due to the presence of glycerol.

In the present invention glycerol is added at rates of 1-20%, preferably at 5-10%, of weight to weight of polymer in order to achieve the permeability to oxygen and carbon-dioxide required to on the one hand ensure absence of suffocation of flower head tissue while on the other hand achieving a relevant reduction of oxidative metabolic degradation of starch / energy stores in the product at hand. It is this reduction of the rate of use of such energy stores which lies at the heart of the preservation of natural resistance factors which provides one of the mechanisms leading to an extended vase life. More importantly, the inclusion of sufficient glycerol provides for the opportunity for inclusion of variable concentrations of desired bioactive agents such as CPAs which will exert their function over a period prolonged beyond the normally accepted effective period due to continued slow release and build up of effective concentrations of CPA released to the surface of the plant parts covered by said coating.

In a third aspect the invention relates to a method for protecting flower heads, especially rose flower heads, wherein the flower heads are coated with a coating composition according to the invention surrounding the flower heads.

### DETAILED DESCRIPTION OF THE INVENTION

In a first aspect the invention relates to a composition for coating a flower head, especially a rose flower head, after harvest, to inhibit metabolic degradation of the flower.

In a second aspect the invention relates to a coating composition also comprising at least one bioactive agent, in particular at least one CPA. The coating formed from such a coating composition provides a barrier function to newly attaching spores from the ambient air, causing such spores, as well as those present at the moment of coating and trapped under the coating, to be exposed to CPAs enclosed in the film. These are enclosed at high concentrations, but very small quantities, within the coating film formed after drying.

The coating composition of the invention comprises a polymer produced from the monomers vinyl acetate and ethylene, and optionally a vinyl ester of a highly branched carboxylic acid.

The dispersions produced from these polymers should allow for inclusion of glycerol, and should not sequester this at drying into a film. Further, the polymer dispersions should preferably accept the inclusion and effective release of bioactive agents.

In case the polymer is produced from the monomers vinyl acetate and ethylene, the polymer is a copolymer. Such copolymer may e.g. be Vinnapas EP 400 or Vinnapas EF 3777 of Wacker Chemie AG.

In case the polymer is produced from the monomers vinyl acetate, ethylene and a vinyl ester of a highly branched carboxylic acid, the polymer is a terpolymer. The vinyl ester of a highly branched carboxylic acid may be for example versatic acid (9 or 10). The vinyl ester of a highly branched carboxylic acid is chosen to affect the rate at which the acetate ester may saponificate and thus stabilizing the terpolymer molecules. Due to the hydrophobic nature of the carboxylic acid, protecting the other constituent monomers from saponification, the water resistance and water uptake of the drying films formed are markedly reduced. Finally such terpolymer dispersions have an ability to combine substantial resistance to sagging while still providing good leveling, resulting in very homogenous layer thickness throughout an applied layer. The monomers being vinyl acetate, ethylene and highly branched carboxylic acid are present in the terpolymer in substantially equal proportions. The terpolymer may e.g. be Vinnapas EZ 3523 of Wacker Chemie AG.

The high degree of branching and the freedom for rotation thus provided to the terpolymer increases its ability to form strong films, their resistance to water and their ability to entrap the water binding secondary material glycerol, as a "channel material". This glycerol provides both space for initial storage and diffusion pathways for subsequent release by diffusion of entrapped water soluble bioactive agents amongst which one may choose for CPAs.

The composition according to the invention may comprise the polymer (copolymer or terpolymer) in an amount of from 1 to 25 % by weight of the composition. Preferably the composition of the invention comprises the polymer in an amount of from 0.75 to 6 % by weight of the composition, more preferably in an amount of from 1.5 to 3 %, glycerol in an amount of from 1 to 20 % by weight of the polymer content, more preferably from 5 to 10 % by weight of the polymer content, the balance of the composition being water.

The amount of polymer and the amount of glycerol will determine the permeability and the capacity for encapsulation of water soluble bioactives of the coating formed from the dispersion. The person skilled in the art will appreciate that, by varying the relative amounts of polymer and glycerol, the permeability to water and gasses may be controlled. If a coating less open to water and gas transmission is desired, the relative amount of polymer may be increased, whereas less glycerol is required. In this respect, also the choice of the polymer plays a role. The person skilled in the art will appreciate that, by varying the type of polymer used for the base of the coating - provided the dry film will fully incorporate the glycerol - films of variable properties with respect to tensile strength, flexibility and transparency will be formed to suit any application required for functional or for example health and safety or legal reasons, while retaining the capability of functioning as low-dose /slow-release system for any water soluble agent or formulation entrapped within the dry film formed. A number of examples of such solutions are provided in the examples of working of the coatings arrived at in this manner below.

Within the scope of the invention also concentrated polymer dispersion compositions are envisaged, that is with a low water content, such as less than 50 wt.%, preferably less than 25 wt.%. These concentrated polymer dispersion compositions may therefore be transported easier, and can be diluted prior to use to the desired concentrations.

As mentioned above the permeability to water should be sufficient to allow excess water (a product of metabolic breakdown of starches) to pass through the coating, once the coating is applied to a flower head. Such excess free water on the interfaces to the external environment (damp barrier) may be formed during sharp temperature changes. On the other hand, the coating once applied, should limit the amount of water loss of the flower buds.

Further, the coating should be suitably permeable to gasses, specifically to oxygen and carbon dioxide. If so, the enclosure effectively controls the levels of such gasses within its confines, thereby forming stable conditions in the mini-environment enclosing the flower buds. The conditions in the mini-environment are beneficial for this "crop" with e.g. respect to storage lifespan, i.e. "vase life", and appreciation.

Typical physical values associated with the preferred permeability to gasses and water for such a coating are for instance, a water permeability of larger than 300 ml/m².bar.day, an oxygen permeability of less than 100 ml/m².bar.day, and a carbon dioxide permeability of less than 200 ml/m².bar.day, as measured at 25°C, with a coating membrane thickness of 25 µm, and a relative humidity of 0 %.

Depending on the specific composition of the coating, the coating further may act as a UV-absorber and/or UV-reflector. As mentioned above, the coating supports the formation of a mini-environment. Such a mini-environment may protect the enclosed flower head from light, more specifically from UV-light. Light typically has a negative effect on the storage life and appearance of cut flowers. If the coating acts as a UV-absorber and/or a UV-reflector, thereby effectively limiting the exposure of the budding flowers to UV-light, storage life will be increased and the appearance of the cut flowers will remain acceptable for a longer time. To this end, additional UV-blockers and/or UV-stabilizers may be added to the composition.

It is noted that the viscosity of the polymer dispersion composition is related to the molecular weight (Mw), degree of pre-polymerisation and crosslinking, chain branching, variations in hydrophilia and hydrophobia end flexibility to rotation of the polymer backbone used as well as to the proportional solid content of the dispersion solution used. In the case of pre-polymerised dispersions, molecular weight is a property of the molecule as formed that can not be defined or is a definition not to be held applicable. Typical values for the viscosity of the dispersion compositions are from 5 - 20 mPas (as determined according to the Hoeppler falling ball method, with a 3 wt.% solution at 20°C).

According to the second aspect the coating composition further comprises one or more bioactive agents, in particular CPAs. These bioactive agents are selected from the group of ethylene oxidants or neutralizers, anti-microbiotics, fungicides, stabilizers, anti-parasitics, anti-infection means, other biologically active compounds, compounds controlling biological active molecules, useful bacteria, useful fungi, useful enzymes, UV-stabilizers, UV-blockers, etc. Such bioactive agents can be chosen from any available and suitable bioactive agents. Such bioactive agents will be used in order to further improve the condition during storage of the cut flowers and to further maintain health, appearance and thus commercial value in a later stage of commercial use. Preferably the bioactive agents do not form a health or environmental risk. Preferably the bioactive agents are used in a total amount of less than 5 wt.%, based on the total polymer mass forming the dispersion or coating composition. For practical purposes, the bioactive agents are preferably water soluble, though other bioactive agents, which can be made water-soluble, such as by using a carrier or encapsulation, are also applicable. In other cases an emulsifier may be added. Based on experiences gleaned from the experiments and studies described in the illustrations below, such bioactive agents are released in a protracted manner, improving bioavailability thereof.

Preferred bioactive agents are selected from the group of ethylene oxidants or neutralizers, anti-biotics, fungicides, pesticides, fertilizers and anti-parasitics.

The coatings obtained by applying the coating compositions of the invention to flower heads and drying, comprising various other ingredients which are releasable, surprisingly offer a further advantage of slowly, and thereby more effectively, releasing these ingredients into a very small virtual space between said coating and the surface of any biological structure or tissue coated. All bioactive agents dissolved in the dispersion solvent, being water, are concentrated into the ensuing film. Due to the absence of any perceivable sequestration, they are distributed throughout the film as formed. With fixed concentrations in the dispersion, reducing polymer solid content giving diminishing thickness of the ensuing film, progressively higher concentrations of these bioactive agents in the polymer film are achieved. With reducing film thickness average diffusion time for any bioactive agents contained and distributed homogenously within the coating to the surface of any coated structure decreases. Thus dosage / time relationships as well as locally or topically achieved concentrations can be controlled. The use of these coatings thereby allows for a significant reduction in the overall amounts of ingredients required for effectively achieving any biological purpose.

Especially, in view of the decreased risk of fungal infection when applying the coating composition of the invention, the amount of fungicide to be added to the composition is in some cases only 5 to 20 % of the amount required conventionally (by short dipping in or spraying of aqueous solutions containing fungicides).

Not only are such included ingredients more effective with respect to their intended purpose, but also a reduction of amounts required is achieved, reducing the costs involved therewith while simultaneously reducing any possible adverse effects on the environment associated with their use. Similarly residues remaining on any commercially sold flowers to which the public may become exposed may be significantly reduced, in some cases 30 fold reductions having been recorded.

The coating according to the invention preferably has a thickness after formation of 0.3 to 12 µm, more preferably of 1.5 to 3 µm. It is clear that if the coating is too thick, permeability towards water will be hampered too much, and if the coating is too thin, the enclosure will be too open to gasses, and further a risk of uneven coatings, which may show ruptures or holes, arises. In addition, with very thin coatings and higher concentrations of bioactive agents included, concentrations from rapidly released bioactive agents may, although quantities in absolute sense may be biologically or from a health and safety perspective negligible, become locally toxic to the exposed plant tissues especially in the case of vulnerable flower petals.

Preferably, the composition of the invention is essentially free of any volatile solvents, especially free of alcohol solvents, since such solvents are toxic for roses and other plants.

In a third aspect the invention relates to a method for protecting flower heads, especially rose flower heads, wherein the flower heads are coated with a coating composition according to the invention surrounding the flower heads, thereby creating a mini-environment. As mentioned above, such a mini-environment effectively controls the water and gas levels inside.

The coating composition (dispersion) according to the invention may be applied one or more times directly on the flower heads, thereby forming a coating. Preferably the dispersion is applied once, but may be applied without evident penalty twice. The coating dispersion can be applied by several techniques, preferably by spraying or immersion rather than by brushing. When the polymer dispersion used has a high viscosity, preferably dilution before using spraying is used for applying the dispersion, whereas with a polymer dispersion with a low viscosity, preferably a spraying / immersion technique is used. The coating is allowed or made to dry after being applied.

In view of environmental issues the coating is preferably water soluble. Thereby, e.g. bacteria more rapidly and easily break down the coating after its use into harmless products, i.e. carbon dioxide and water. In view of the extremely thin layer of dried film used, and the biodegradable nature of the plant tissues coated, breakdown for full digestion in composting is not evidently impaired.

The description above is included in order to illustrate the preferred embodiments of the present invention, and not to limit the scope of the invention. For the person skilled in the art many variations will be evident, in light of the description above that fall under the scope of the present invention.

Therefore, the following examples are meant to illustrate the invention, and not to limit the invention.

### EXAMPLES

The following illustrations of principles, methods and effects have made use of several coating dispersion variants, and have used different methods of application. Additives, if any were used, have varied between experiments.

### Example 1

Aqua type roses of 60 cm length class are used, sampled randomly from a production line at the time of year when Botrytis problems are at their most severe. Samples were spray coated to varying final film layer thickness as established by model spraying onto glass sheets, and coatings were applied with variable inclusions of a freshly prepared appropriate fungicide to which Botrytis has known susceptibility. The coating composition comprised a terpolymer, being Vinnapas EZ 3523 made by Wacker Chemie AG, glycerol and water. The coating of a layer thickness of 25 µm was made by applying a coating composition comprising the terpolymer in an amount of 25 % w/v and spraying the coating composition over a predetermined area to achieve this. The coating of a layer thickness of 12 µm was made by applying a coating composition comprising the terpolymer in an amount of 12 % w/v. The coatings of a layer thickness of 6 µm, 3 µm and 1.5 µm, respectively, were made by applying a coating composition comprising the terpolymer in an amount of 6, 3 and 1.5 % w/v, respectively while spraying the coating composition over a fixed area. The amount of glycerol in all compositions was 5 weight% by weight of the terpolymer. The fungicide was Switch, as distributed by Syngenta and was used in a concentration of 20% of the concentration advised, i.e. 0,16 gram / liter rather than 0,8 gram / liter. In order to ensure sufficient sensitivity for the test to detect any reduction in severity of Botrytis infection, in addition to standard vase-life tests in open air, an equal sample from each test group was subjected to a Botrytis provocation procedure by enclosing the flowers with a fully closed plastic bag (semitransparent waste bin bag, commercially sold in supermarket and of 30 liter content size), sealed onto the glass vase by either cellotape or double elastic bands. The study was carried out by spraying (using commercially available airbrush spray equipment for model paint application at air pressure of 3,5 bar and applying between 1 and 1,5 ml per rose flower head in each case) 1 day after harvest after night of cooling. Flowers were allowed to dry for between 1 and 3 minutes before being covered under plastic bags. Study groups were kept on vases for a 10 day full length vase-life study with addition of commercial (Chrysal) nutrition to water at prescribed dosage - 1 sachet for 500 ml of vase water). Bags were only removed on day 10 after spray coating. The results show the following:

| | not coated | coated without fungicide (carrier only) | coated with fungicide at 20% of commercial strength concentration to spray solution | | | | |
|---|---|---|---|---|---|---|---|
| Group: | Control | 25 µm | 25 µm | 12 µm | 6 µm | 3 µm | 1.5 µm |
| Open vase | 2/10 | 4/10 | 2/10 | 1/10 | 0/10 | 0/10 | 0/10 |
| | 7 | 9 | 5 | 3 | 0 | 0 | 0 |
| | | | | | | | |
| Bagged group | 10/10 | 10/10 | 6/10 | 4/10 | 2/10 | 0/10 | 1/10 |
| | 40 | 40 | 21 | 12 | 5 | 0 | 2 |
| First row in each group gives number of roses affected out of 10 roses / group, second row gives total botrytis score for each study group based on score from grade 0 for a | | | | | | | |
| Botrytis unaffected rose to grade 4 for maximal damage, per rose, group scores may thus range from 0 to 40 at maximum. | | | | | | | |

It is evident from the results that there is clear evidence of protection from Botrytis directly related to gradual diminishing thickness of the coating. Coating without fungicide did not protect from Botrytis in the open vase segment of the study and worsened disease in the roses enclosed in plastic bags.

The return of some Botrytis damage at coating thickness of 1,5 micron may reflect invasion of the plant tissue by remaining vital spores facilitated by damage to plant tissues by locally increasing fungicide concentrations or alternatively by areas of absent or defective arising with drying.

### Example 2

A full repeat of example 1 was carried out inclusive of second species of rose at the same grower, i.e. Ilios, and in both rose types two additional groups were included with increased concentrations of the original fungicide, i.e. at 40% of commercially used concentrations. Coating at 25 microns thick was not used and the 0-dose group used 12 micron coating. The results are the following (only results for bagged groups are given, note that with individual scores of 0-4, group scores as given with 10 roses may range from 0 to 40 at maximum):

| | | control | 0-dose | 20 % fungicide | | | | 40% fungicide | |
|---|---|---|---|---|---|---|---|---|---|
| | | No coat | 12 µm | 12 µm | 6 µm | 3 µm | 1.5 µm | 3 µm | 1.5 µm |
| Aqua rose | n/10 | 10 | 9 | 7 | 4 | 1 | 0 | 1 | 2 |
| | Score | 40 | 31 | 22 | 7 | 1 | 0 | 1 | 3 |
| Ilios rose | n/10 | 10 | 7 | 6 | 2 | 0 | 0 | 0 | 1 |
| | score | 40 | 26 | 12 | 4 | 0 | 0 | 0 | 2 |

It is evident from the findings that the protective effect again develops with increased protection found with reducing layer thickness underscoring the low-dose / slow-release principle. Similarly a return of (mild) damage recurs with increasing the fungicide concentrations at the lower end of layer thickness, supporting the concept of the working principle. In this case there is some improvement of results using coating at a thick layer even without addition of any fungicide, possibly representing a barrier function to colonization of susceptible rose flower heads with spores present in the ambient air.

### Example 3

In the following example the most important results of a representative segment of a full scale reproducibility trial is presented, carried out on location at 10 different rose growers, using 19 different rose species. Only the results at the lower end of layer thickness variations, and of the 10 commercially most important (largest volumes produced commercially and delivered to auction) and covering the whole range of results obtained are presented. The results for 9 remaining species are within the same range of values. The results given represent findings under sealed bags. In all cases the full range of layer thickness variations as well as dosing of the fungicide Switch (Syngenta) at 20% (0,16 gram /liter) and 40% (0,32 gram / liter) of recommended concentrations (0,8 gram / liter) were tested. The results for the representative and most relevant layer thicknesses and study groups are as following:

| Rose type | Total Botrytis score at day 10 for bagged roses, score 0-4 for each of 10 roses, maximal group score = 40 | | | | | |
|---|---|---|---|---|---|---|
| | control | 0-dose | 20% fungicide | | 40% fungicide | |
| | No coat | 12 µm | 3 µm | 1.5 µm | 3 µm | 1.5 µm |
| Avalanche | 36 | 33 | 1 | 0 | 1 | 2 |
| White Naomi | 40 | 31 | 0 | 1 | 2 | 3 |
| Red Naomi | 39 | 35 | 0 | 0 | 0 | 1 |
| Aqua | 32 | 29 | 1 | 0 | 1 | 1 |
| Maroussia | 40 | 38 | 1 | 0 | 2 | 3 |
| Akito | 26 | 31 | 0 | 0 | 0 | 0 |
| White Night | 37 | 36 | 2 | 0 | 0 | 2 |
| Milk Shake | 25 | 22 | 0 | 0 | 1 | 2 |
| Musette | 28 | 24 | 0 | 1 | 0 | 1 |
| Ilios | 35 | 33 | 0 | 0 | 0 | 0 |

In all cases studied the effect of Botrytis protection had increased with stepwise reduction of coating layer thickness. In all cases complete protection was reached at at least one of the two lowest thickness steps.

In all cases an additional control with the identical fungicide, i.e. Switch (Syngenta) in water at both 20 and 100% of recommended concentrations was included. The effect generally was unacceptable with Botrytis scores at 100% of recommended dose for fungicide were found to be reduced to only 40-50% of controls and for 20% concentrations results were worse.

With increase to 40% of recommended concentration levels in the coating composition, most cases showed some re-expression of mild and very limited Botrytis possibly reflecting some degree of effect of local fungicide concentrations on plant tissue raising vulnerability to infection.

Virtually identical results were reached in tests repeating in full the experiments of Example 3 under identical conditions, using an aqueous, plasticizer-free polymer dispersion produced from the monomers vinyl acetate and ethylene. For these tests Vinnapas EP 400 and Vinnapas EF 3777 by Wacker GmbH (Germany) were used.

Thus in summary, coating rose post-harvest with a coating composition of the invention, in actual field trials under commercial conditions in routine production facilities, as described, leads to:
1. Reduction or elimination of Botrytis infection of roses under the circumstances as tested.
2. Prolonged vase life of roses under the circumstances tested.
3. Reduction of or elimination losses in commercial rose production, storage and or transport.
4. Significant increase in value of rose production.

## Claims

1. A composition for coating flower heads post-harvest to inhibit or prevent infection of the flowers during transport and storage, which composition comprises a polymer produced from the monomers vinyl acetate and ethylene, and optionally a vinyl ester of a highly branched carboxylic acid, glycerol and water, the composition being in the form of a dispersion.

2. The composition according to claim 1, comprising said polymer in an amount of from 1 to 25 % by weight of the composition.

3. The composition according to claim 2, comprising the polymer in an amount of from 0.75 to 6 % by weight of the composition.

4. The composition according to claim 3, comprising the polymer in an amount of from 1.5 to 3 % by weight of the composition.

5. The composition according to any one of the preceding claims, comprising said glycerol in an amount of from 1 to 20 % by weight of the polymer within the composition.

6. The composition according to claim 5, comprising the glycerol in an amount of from 5 to 10 % by weight of the polymer within the composition.

7. The composition according to any one of the preceding claims, further comprising one or more bioactive agents selected from the group consisting of ethylene oxidants or neutralizers, anti-biotics, fungicides, pesticides, fertilizers and anti-parasitics.

8. The composition according to claim 7, comprising the one ore more bioactive agents in an amount of less than 5 % by weight of the polymer within the composition.

9. The composition according to any one of the preceding claims, which is essentially free of any volatile alcohol solvents.

10. A method of inhibiting or preventing infection of cut flowers during transport and storage by applying to the flower heads post-harvest a composition as defined in any of the claims 1 to 9 to form a coating.

11. The method according to claim 10, wherein the flowers are roses.

12. The method according to claim 10 or 11, to inhibit or prevent Botrytis infection of the flowers.

13. The method according to any one of claims 10 to 12, wherein the composition is applied to the flower heads by spraying or immersion.

14. The method according to any one of claims 10 to 13, wherein the thickness of the coating is from 0.3 to 12 µm, preferably from 1.5 to 3 µm.
